# EUROPEAN PATENT APPLICATION

(11) **EP 1 336 575 A2**
(43) Date of publication of application: **20.08.2003**
(21) Application number: 03394016.4
(22) Date of filing: 13.02.2003
(51) Int. Cl.: B65D 81/32, B65D 83/00, B01F 13/00, B05C 17/00

(54) **Cartridge for a reusable dispenser**

(30) Priority: 14.02.2002 GB 0203501
(71) Applicant: Exchem Plc, Alfreton, Derbyshire DE55 7RE (GB)
(72) Inventor: Ewings, Paul Francis Reginald, Ripley, Derbyshire DE5 3JP (GB)
(74) Representative: Gordon, Naoise Padhraic Edward

(57) **Abstract**

A cartridge (1) for dispensing an extrudable material (4) comprising:- an outer collapsible tube (2) defined about a longitudinal axis (19) having an open end (15) and a closed end (16),an inner chamber (20) coaxial with the collapsible outer tube (2) for storing the extrudable material (4),an outlet (9) at the closed end (16) of the inner chamber (20), at least one internal frangible tube (3) in the inner chamber (20) communicable with the outlet (9) and containing the extrudable material (4), and a piston (5) at the open end (15) of the collapsible outer tube (2), the piston (5) being engageable with the collapsible outer tube (2) to collapse the cartridge (1) in an axial direction and extrude the extrudable material (4) through the outlet (9).

## Description

This invention relates to a cartridge for use in reusable dispensing devices for dispensing an extrudable material through an outlet provided at one end of the cartridge.

EP 0 754 633A discloses a known cartridge for dispensing a multi-component composition, of the type known as a "CIC" (capsule in cartridge). A flexible plastics bag having two or more compartments, each containing a reactive component of a multi-component composition, is placed inside a rigid tubular reusable cartridge. The bag extends at one end through a nozzle adapter and is sealed by a staple. The bag remains sealed until the material is to be dispensed whereupon the user cuts the bag adjacent to the staple and fits a nozzle to the nozzle adapter. A piston attached to the dispensing gun is slidable within the rigid cartridge and, upon operation of the gun, the piston acts as a driver on the bag and the material in it thereby forcing the material from the bag and through the nozzle in an extruded form.

In other arrangements, material to be dispensed is supplied in foil pouches which are generally cylindrical in shape. The foil pouches are used as single pack components for sealants, polyurethanes, silicones and the like in conjunction with tubular applicators fitted with an end piece which acts as a nozzle for the material to be extruded. The foil pouches are inserted into the tubular applicator and the foil pouch is compressed in the same manner as the flexible plastics bag described above.

German Patent Specification No 29616835, European Patent Specification No 0 472 448A, European Patent Specification No 0 665 063A, British Patent Specification No 2226855B and European Patent Specification No 0 855 349A describe similar arrangements in which two foil pouches are disposed in a rigid tubular applicator with the foil pouches being essentially full.

The known arrangements suffer from a number of disadvantages in that all the devices employ a rigid and non-collapsing guide tube which retains its original dimensions after use thereby giving rise to a large volume of waste.

German Patent Specification No 19943877A describes the use of a collapsible metal inner tube within a rigid outer container while British Patent Specification No 2246172 describes the use of a collapsible plastics inner tube. European Patent Specification No 0 221 020A describes a corrugated outer container for a single use rupturable capsule while British Patent Specification No 1452059 describes a single component collapsing tube applicator.

According to the invention there is provided a cartridge for dispensing an extrudable material comprising an outer collapsible tube defined about a longitudinal axis having an open end and a closed end, an inner chamber coaxial with the collapsible outer tube for storing the extrudable material, an outlet at the closed end of the chamber, at least two internal frangible tubes in the inner chamber communicable with the outlet and containing the extrudable material, and a piston at the open end of the collapsible tube, the piston being engageable with the collapsible outer tube to collapse the cartridge in an axial direction and extrude the extrudable material through the outlet.

Preferably, the outer collapsible tube comprises laterally extending corrugations to effect collapse of the cartridge. Suitably, the outlet is in communication with a nozzle for discharging the extrudable material. Advantageously, the nozzle comprises connecting means for connecting the nozzle. Preferably, the cartridge comprises two internal frangible tubes for dispensing a two-part composition. More preferably, the at least one internal frangible tube extends into the outlet. Suitably, the at least one internal frangible tube is partly filled with extrudable material. Preferably, the cartridge further comprises a buttress at the closed end to reinforce the collapsible tube. Alternatively, the cartridge comprises an annular ring coaxial with the longitudinal axis in the inner chamber for reinforcing the closed end of the inner chamber.

The invention also provides a method of dispensing an extrudable material from a cartridge having an outer collapsible tube defined about a longitudinal axis and at least one internal frangible tube containing the extrudable material coaxial with the outer collapsible tube, which comprises placing the cartridge in a rigid sleeve having a discharge outlet communicable with the extrudable material, compressing the cartridge with an axially moving plunger to extrude the extrudable material from the at least one internal frangible tube and forming a compressed capsule from the cartridge.

Preferably, the cartridge has two internal frangible tubes for extruding a two part extrudable material. More preferably, the method comprises removing the compressed capsule from the rigid sleeve to re-use the rigid sleeve.

The invention therefore provides a collapsible outer tube for use in a tubular type applicator having a rigid outer wall or sleeve. The outer tube of the invention has a concertina-like nature which facilitates progressive collapse in the direction of its longitudinal axis i.e. along the direction of travel. External sideways excursion of the collapsible tube is prevented by the rigid outer wall of the tubular applicator and by pressure from the contents of the collapsible tube. The frangible tube is typically formed from a flexible plastics material and is bag-like in construction. A driving piston force at the open end of the collapsible tube along the longitudinal axis of the collapsible tube serves to urge the contents of the frangible tube within the collapsible tube only and performs no sealing function. The thin walled collapsible metal tube also allows for easy extrusion.

The collapsible outer tube is typically formed from aluminium or the like.

In the manufacture of the cartridge of the invention, the piston is formed separately from the collapsible outer tube such that the flexible frangible tube containing material to be dispensed can be pulled into the outer collapsible tube employing a device inserted through the nozzle.
Once the frangible tube has been inserted into the outer collapsible tube, a clip is attached at the nozzle. The clip serves as a non-return mechanism to prevent the tubes from re-entering the cartridge and facilitates easy and accurate handling by a user when opening the frangible tubes by cutting. The piston is subsequently fitted to the outer collapsible tube. To assist in the even collapse of the collapsible outer tube, the piston enjoys a tight fit with the open end of the collapsible outer tube.

A supporting region or piece for reinforcing the collapsible tube shoulder can be integrated with the collapsible tube at the closed end. Where the shoulder piece is compatible with the piston, an emptied crumpled tube or capsule results following use which totally encases the emptied frangible plastics tube. The crumpled tube can be removed from the dispensing device. Accordingly, the volume of non-recyclable waste is reduced thereby easing storage problems.

The crumpled capsule can be recycled in the manner normally employed for aluminium and similar products e.g. by melting. Recycling facilitates separation of the undesirable contents of the capsule from the aluminium.

None of the prior art documents describes the use of a corrugated, collapsible outer container for plural component use.

The cartridge of the invention can be used in reusable dispensing devices such as caulking guns for dispensing materials such as sealants, fillers, two-part compositions or the like.

The advantages of the invention are many and result in a cartridge having lower costs than known cartridges. The cartridge of the invention facilitates easier separation and recycling of the contents of the cartridge and the material of the cartridge. Moreover, the volume of waste is reduced while the number of components required in an assembly to dispense extrudable materials is also reduced. The invention is not restricted to the use of cylindrical tubes and collapsible tubes having different shaped cross-sections can be used. The end user of the cartridges of the invention can sell the spent cartridges as scrap or, if desired, the cartridges could be returned to the supplier by the end user.

The location of the cartridge of the invention containing frangible tubes within the outer supporting sleeve facilitates an even and controlled collapse of the cartridge of the invention to ensure controlled extrusion with minimal residue. In addition, the use of frangible tubes in the cartridge of the invention facilitates the use of multiple components within the cartridge in differing ratios as required.

Various embodiments of the invention will now be described, by way of example only, having regard to the accompanying drawings in which:
Fig 1 is a perspective view from above and one side of a cartridge in accordance with the invention mounted in the rigid cylindrical guide tube or sleeve of a reusable dispensing gun;
Fig 2 is a perspective view from above and one side of the apparatus of Figure 1 with the reusable rigid cylindrical guide tube removed to show the cartridge of the invention;
Fig 3 is a partial cross-section through the cartridge of Figures 1 and 2 prior to use in which the internal frangible tubes are partially filled and located within the collapsible outer tube;
Fig 4 is a front elevation of the cartridge of Fig 3 showing the buttresses at the closed end of the collapsible tube;
Fig 5 is a partial cross section through the closed end of a second embodiment of a cartridge of the invention and a portion of the cartridge and
Fig 6 is an enlarged partial cross section through the piston employed with the embodiment of the cartridge of Figure 5 and a portion of the side wall of the cartridge.

A cartridge in accordance with the invention is generally indicated by the reference numeral 1 and is adapted for use in a dispensing gun 21 having a cylindrical guide sleeve 22. The dispensing gun 21 and the guide sleeve 22 are of conventional construction. The cartridge 1 is made up of a generally cylindrical collapsible outer tube 2 having a longitudinal axis generally indicated by the reference numeral 19 and two generally coaxial frangible inner tubes 3 in a chamber 20 defined by the collapsible outer tube 2. The frangible inner tubes 3 contain material to be dispensed 4. Typically, where two frangible tubes 3 are employed, the extrudable material 4 is a two-part composition.

As will be described more fully below, the frangible inner tubes 3 are formed as a unitary tube separated by a chord.

The collapsible outer tube 2 is made up of a side wall 12 having an open end 15 and a closed end 16. The collapsible outer tube 2 is provided with a piston 5 at the open end 15 end and a nozzle 6 containing an outlet 9 at the closed end 16. The frangible inner tubes 3 extend between the piston 5 and the nozzle 6 and are closed at the open end 15 of the collapsible outer tube 2 adjacent the piston 5 by a staple 7. The frangible tubes 3 are also closed by a staple 7 at the open end (not shown). The staples 7 are preferably formed from aluminium or copper.

The collapsible outer tube 2 is concertina-like in structure and is provided with laterally extending corrugations 11 to facilitate collapse of the outer tube 2 in the direction of travel of the piston 5 along the longitudinal axis 19.

A shoulder piece 10 is provided between the nozzle 6 and the collapsible outer tube side wall 12. The shoulder piece 10 is made up of a thickened region of the collapsible outer tube 2 to reinforce the collapsible outer tube 2.

Buttresses 8 protrude from the outer surface of the shoulder piece 10 to support the tube 2 in a dispensing gun.

The piston 5 contacts and overlaps the side wall 12 of the collapsible outer tube 2 at its open end 15 as indicated generally by the reference numeral 17. In order to facilitate effective contact between the side wall 12 of collapsible outer tube 2 and the piston 5, the side wall 12 comprises a rolled edge 18. The rolled edge 18 and the overlapping piston 5 facilitate complete collapse of the cartridge 1 at the corrugations 11 to effectively seal residual material within the collapsed cartridge 1.

The shoulder piece 10 defines a funnel-shaped interior surface 13 which aids the flow of material to be dispensed from the internal frangible tube 3. The exterior of the nozzle 6 is provided with a male thread 14 to facilitate attachment of caps, mixers/nozzles and the like. It is to be understood that the invention is not limited to threaded nozzle connectors and other connecting means may be used.

The co-axial internal frangible tubes 3 are of conventional construction known in the art and are formed from a flexible pliable material, typically plastics, compatible with the material to be dispensed 4. The plastics material of the frangible tubes is typically a laminate made up of a dimensionally stable barrier film and heat sealable outer layers. It is also possible to use a single layer film, for example polyethylene, if desired. However, a laminate made up of a central core of a PET polyester (polyethylene terephthalate), or PA Nylon 6 (polyamide 6) with an outer heat sealing layer gives desirable characteristics of puncture resistance and shape retention. However, once cut, plastic film is easily torn to give a clean aperture for the extrudable material 4 through the outlet 9. The polyethylene terephthalate and the polyester also serve as a membrane to prevent loss of volatile components such as the monomers found in various extrudable resin materials such as unsaturated polyester and vinylester resins. In addition, the heat sealing layers of the plastics material also serve as effective barriers against the migration of water which can be present in the extrudable materials 4 contained within the frangible tubes e.g. water is a common component in the dibenzoyl peroxide catalysts employed with the polyester and vinylester resins referred to above.

The heat sealing layers can be formed from polypropylene, polyethylene or a combination of polyethylene and "Surlyn" (Trade Mark). As indicated above, the cartridge 1 typically contains two internal frangible tubes 3 where two-part compositions are to be dispensed.

Where two internal frangible tubes 3 are employed, the internal frangible tubes 3 are formed from a single piece of plastics film subdivided into the internal frangible tubes 3. To form two internal frangible tubes having an overall diameter of 45 mm from a single piece of plastics film, the film is wound around a tubular mandrel such that one edge overlaps the other by from about 20 mm to 55 mm.
The two edges are then heat sealed to create a tube within a tube in the form of a cylinder bisected by a chord between about 15 mm and 45 mm such that the two portions are in the ratio in the range 20-1:1 by volume. In appearance, the internal frangible tubes 3 resemble a bag or skin and are filled with the material(s) to be dispensed 4 in a known manner.

The frangible tubes 3 are supplied as a continuous tube which is cut to length and sealed by the staple 7. The internal frangible tubes 3 are not filled to their capacity so that they can be inserted in the collapsible outer tube 2 and one end of the continuous tube can be drawn through the outlet 9 of the nozzle 6 as previously described. For example, where the frangible tubes 3 are filled to about 80% capacity only, the flexible pliable material of the continuous tube can be passed through the outlet 9 with ease into a mixer nozzle. Accordingly, the extrudable material is dischargable directly into the throat of the mixer nozzle thereby preventing premature reaction of components and blockage.

In use, the cartridge 1 containing material to be dispensed 4 is placed in the reusable rigid cylindrical guide tube or sleeve 22 of the gun dispenser 21 as previously described. The cartridge 1 is loaded into the guide sleeve 22 in known manner. An external nozzle 23 is fitted to the thread 14 of the nozzle 6. The buttresses 8 serve to assist in supporting the collapsible outer tube 2 in the gun while sideways deformation of the collapsible outer tube 2 is prevented by the rigid guide tube 22 of the dispenser. The buttresses 8 therefore serve to provide additional support and rigidity to the collapsible outer tube 2 at its closed end 16 thereby ensuring correct function and collapse of the collapsible outer tube 2 along its longitudinal axis 19 during the extrusion process. Material is dispensed from the internal frangible tube 3 by urging the piston 5 against the material to be dispensed 4 within the internal frangible tube 3 to eject the material from the nozzle 6. The piston 5 causes progressive and controlled collapse of the outer collapsible tube 2 along the longitudinal axis 19 about the lateral corrugations 11 so that the volume of the collapsible outer tube 2 is reduced as the material to be dispensed is discharged from the cartridge 1.

Following extrusion of the contents of the internal frangible tubes 3, a collapsed tube or capsule results in which residual material to be dispensed 4 is effectively sealed to make for easy and effective disposal and recycling of capsule in an environmentally friendly manner.

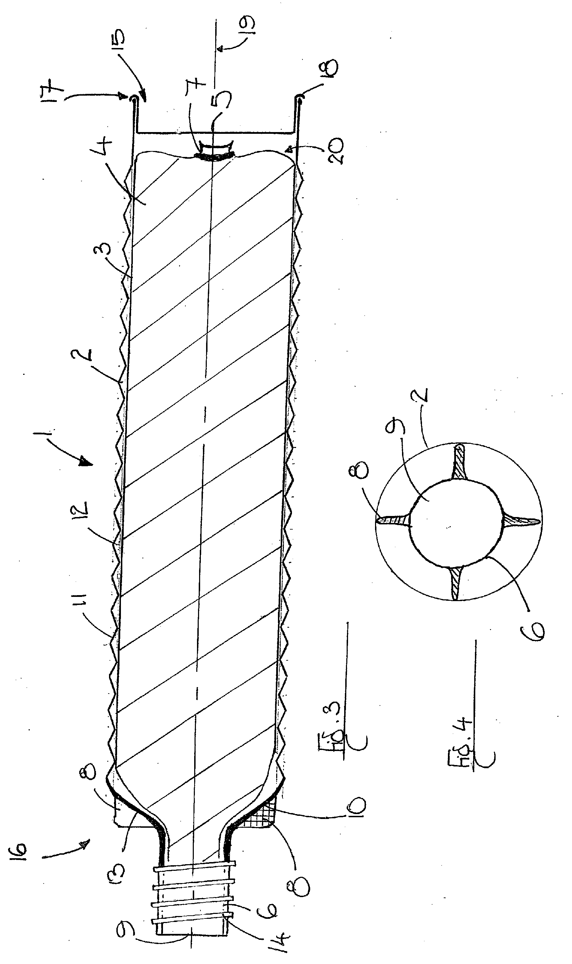

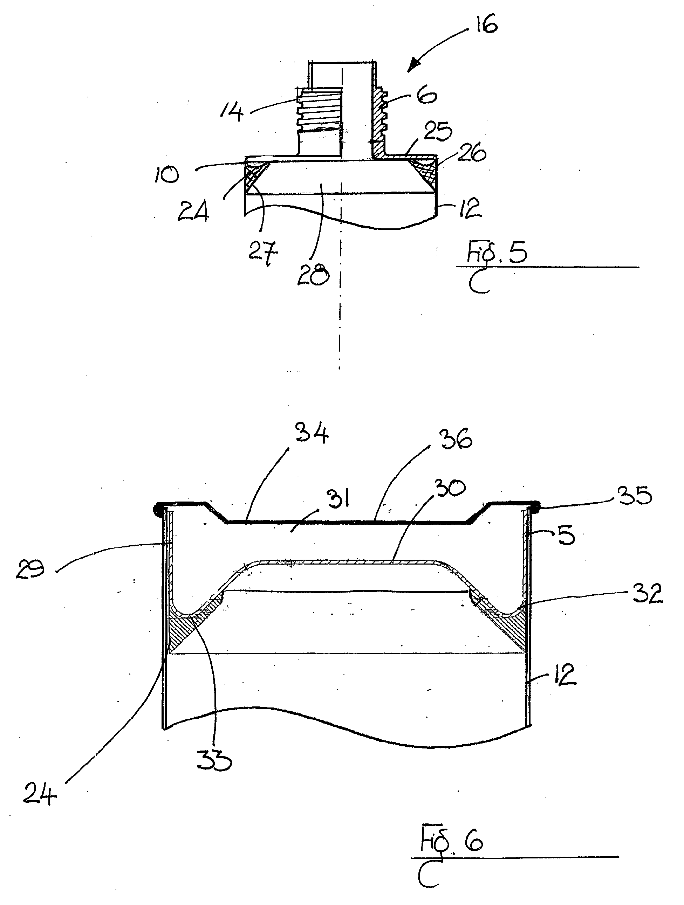

Figures 5 and 6 show a second embodiment of a cartridge 1 in accordance with the invention. The embodiment of Figures 5 and 6 is broadly similar to the embodiment described above. However, in the present embodiment, the piston 5 and the closed end 16 of the cartridge 1 have been modified as described further below.

More particularly, as shown in Figure 5, the closed end 16 is provided with a reinforcing annular ring 24 at the shoulder piece 10 of the closed end 16.
In the present embodiment, the shoulder piece 10 is a flat shoulder piece 10 i.e. the shoulder piece is provided with a flattened bearing wall 10 disposed about the nozzle 6 in place of the buttresses 8.
The bearing wall 25 is reinforced by the annular ring 24. Accordingly, buttresses 8 are not required.

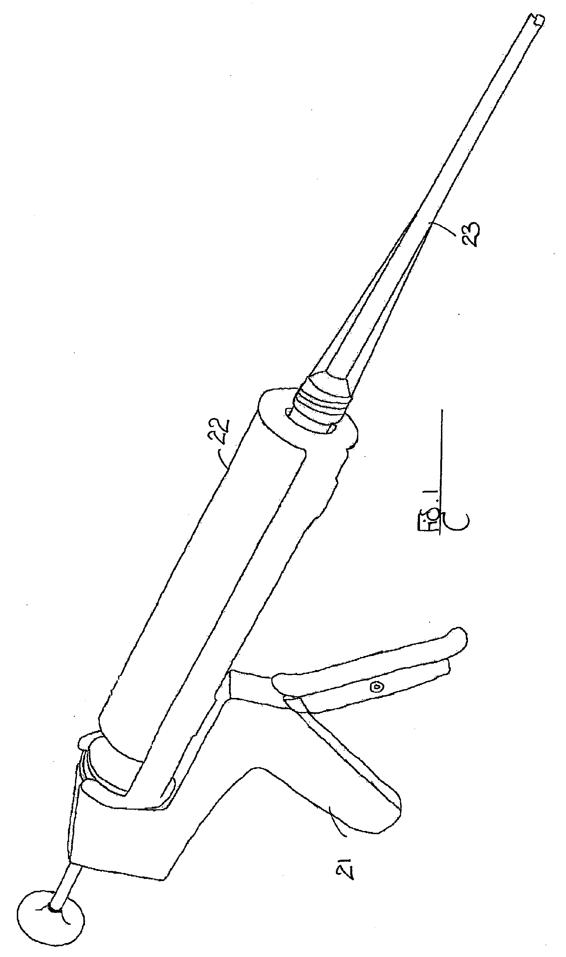

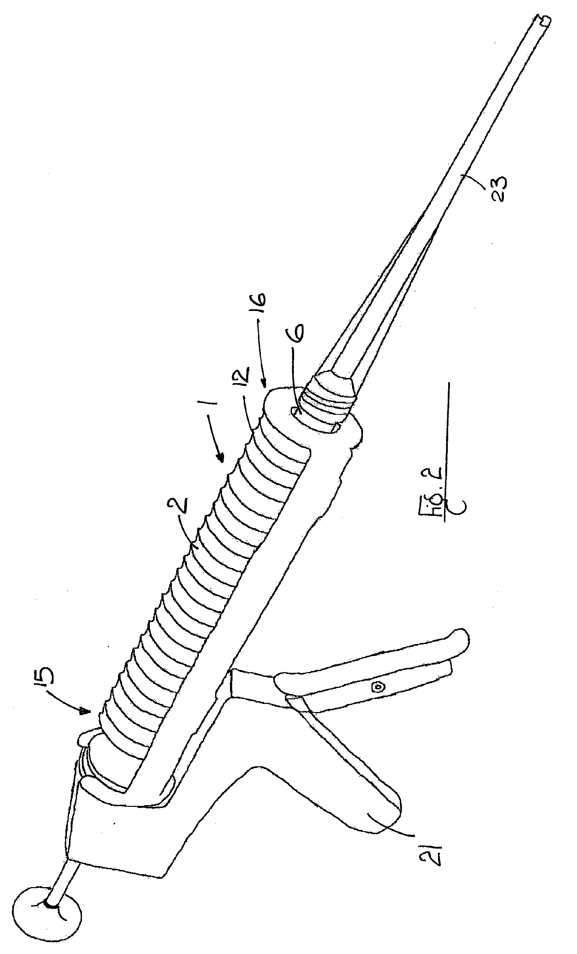

The annular ring 24 has a circular side wall 26 having an inclined inner surface 27 to define a funnel shape 28 within the annular ring 24. The funnel shape 28, like the funnel-shaped interior surface 13 of Figure 3, is adapted to accommodate the frangible tubes 3.

Figure 6 shows and alternative piston for use in the second embodiment of the invention. The piston 5 is adapted to be received in the open end 15 of the cartridge 1. The piston 5 is formed from a "deep drawing" process and is made up of a substantially cylindrical side wall 29 and a recessed bottom wall 30. The side wall 29 and the recessed bottom wall 30 are formed from a single piece in the "deep drawing" process while the piston 5 is provided with an open end 31 defined by the side wall 29. The piston 5 is also provided with a convexly curved rim 32 between the side wall 5 and the recessed bottom wall 30.

The rim 32 is adapted to receive a second annular ring 24 identical to the annular ring 24 described in Figure 5. The annular ring 24 is provided with a concave upper surface 33 adapted to the convex rim 32. The annular ring 24 serves to prevent the frangible tubes 3 from becoming entrapped between the piston 5 and the side wall 12 of the cartridge to presents a smooth taper that eases the frangible tubes 3 from the side wall 12 thereby assuring an even extrusion and collapse.

The flat bearing wall 25 facilitates an easier and more cost effective extrusion manufacturing process of the cartridge 1 and also provides an increased bearing surface to distribute pressure on the cartridge 1 more evenly during extrusion thereby preventing premature collapse of the cartridge 1 during extrusion.

A disc piece 34 is mounted over the open end 31 of the piston 5 between the side wall 29 to provide a bearing surface for the gun 21. The disc piece 34 is provided with a rolled-over edge 35 to fit over the side wall 12 of the cartridge 1 at the open end 15 to facilitate collapse of the cartridge 1 in use. The disc piece 34 is also provided with a bearing surface 36 for receiving the piston driving force from the dispensing gun 21.

The annular rings 24 are typically formed from recycled plastics components having air entraining agents incorporated therein to reduce the density of the plastics components.

The piston 5 of Figure 6 is inserted into the cartridge one with the recessed bottom wall 30 disposed into the cartridge 1.

The cartridge of the invention can be formed from any suitable material. However, aluminium or a similar material is preferred. The properties of aluminium renders it particularly suitable for use in the present invention. For example, aluminium is extremely ductile and is readily processed using well established and economical extrusion techniques. In addition, aluminium has significant environmental benefits which facilitates the recycling of the aluminium in a cost effective manner. For example, re-melting of aluminium does not impair its properties while recycled aluminium can be used in almost all applications.

However, other materials may be suitable for use in the cartridge of the intention e.g. copper. A collapsible outer tube 2 formed from aluminium is tapered toward the closed end 16 and has a thickened shoulder piece 10 as previously described. Typically, in the example shown in Figures 1 and 2, the collapsible outer tube 2 is thickened from an aluminium thickness of 0.8 mm at the nozzle 6 to 0.32 mm at the shoulder piece 10 and to less than 0.3 mm at the open end 15 remote from the nozzle 6. The depth and pitch of the corrugations 11 is dependent upon the overall diameter and length of the collapsible outer tube 2. The corrugations 11 may also be varied in profile along the length of the collapsible outer tube 2 to ensure an even collapse. Typically, in the example shown in Figures 1 and 2, the pitch remains at 3 mm but the corrugation depth increases from 0.8 mm to 0.9 mm towards the open end 15 of the collapsible outer tube 2.

## Claims

1. A cartridge (1) for dispensing an extrudable material (4) comprising:-
an outer collapsible tube (2) defined about a longitudinal axis (19) having an open end (15) and a closed end (16),
an inner chamber (20) coaxial with the collapsible outer tube (2) for storing the extrudable material (4),
an outlet (9) at the closed end (16) of the inner chamber (20),
at least two internal frangible tubes (3) in the inner chamber (20) communicable with the outlet (9) and containing the extrudable material (4), and a piston (5) at the open end (15) of the collapsible outer tube (2), the piston (5) being engageable with the collapsible outer tube (2) to collapse the cartridge (1) in an axial direction and extrude the extrudable material (4) through the outlet (9).

2. A cartridge (1) as claimed in Claim 1 **characterised in that** the outer collapsible tube (2) comprises laterally extending corrugations (11) to effect collapse of the cartridge (1).

3. A cartridge (1) as claimed in Claim 1 or Claim 2 **characterised in that** the outlet (9) is in communication with a nozzle (6) for discharging the extrudable material (4).

4. A cartridge (1) as claimed in Claim 3 **characterised in that** the nozzle (6) comprises connecting means (14) for connecting the nozzle (6).

5. A cartridge (1) as claimed in any of Claims 1 to 4 **characterised in that** the cartridge (1) comprises two internal frangible tubes (3) for dispensing a two-part composition.

6. A cartridge (1) as claimed in any of Claims 1 to 5 **characterised in that** the at least one internal frangible tube (3) extends into the outlet (9).

7. A cartridge (1) as claimed in any of claims 1 to 6 **characterised in that** the at least one internal frangible tube (3) is partly filled with extrudable material (4).

8. A cartridge (1) as claimed in any of Claims 1 to 7 further comprising a buttress (8) at the closed end (16) to reinforce the collapsible tube (2).

9. A cartridge (1) as claimed in any of Claims 1 to 7 further comprising an annular ring (24) coaxial with the longitudinal axis (19) in the inner chamber (20) for reinforcing the closed end (16) of the inner chamber (20).

10. A method of dispensing an extrudable material (4) from a cartridge (1) having an outer collapsible tube (2) defined about a longitudinal axis (19) and at least one internal frangible tube (3) containing the extrudable material (4) coaxial with the outer collapsible tube, which comprises placing the cartridge (1) in a rigid sleeve having a discharge outlet communicable with the extrudable material (4), compressing the cartridge (1) with an axially moveable plunger to extrude the extrudable material (4) from the at least one internal frangible tube (3) and forming a compressed capsule from the cartridge (1).

11. A method as claimed in Claim 10 **characterised in that** the cartridge (1) has two internal frangible tubes (3) for extruding a two-part extrudable material (4).

12. A method as claimed in Claim 10 or Claim 11 further comprising removing the compressed capsule from the rigid sleeve to re-use the rigid sleeve.
